(19)

Europäisches
Patentamt
European
Patent Office
Office européen
des brevets

(11) **EP 2 317 763 A1**

(12) **EUROPEAN PATENT APPLICATION**
published in accordance with Art. 153(4) EPC

(43) Date of publication:
**04.05.2011 Bulletin 2011/18**

(51) Int Cl.:
*H04N 7/01* (2006.01)   *G06T 7/20* (2006.01)

(21) Application number: **09809637.3**

(22) Date of filing: **19.03.2009**

(86) International application number:
**PCT/JP2009/055423**

(87) International publication number:
**WO 2010/023982 (04.03.2010 Gazette 2010/09)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **27.08.2008 JP 2008217866**

(71) Applicant: **Mitsubishi Electric Corporation Tokyo 100-8310 (JP)**

(72) Inventors:
• **KOIKE, Masahide**
  **Tokyo 100-8310 (JP)**

• **ONO, Yoshiki**
  **Tokyo 100-8310 (JP)**
• **SUKENO, Junji**
  **Tokyo 100-8310 (JP)**
• **SUGIYAMA, Kazuhiro**
  **Tokyo 100-8310 (JP)**
• **OGAWA, Fuminobu**
  **Tokyo 100-8310 (JP)**

(74) Representative: **Bachelin, Karl Martin Raimund Hoffmann Eitle Patent- und Rechtsanwälte Arabellastrasse 4 81925 München (DE)**

(54) **MOTION VECTOR DETECTION DEVICE AND IMAGE PROCESSING DEVICE**

(57)    An object of the present invention is to provide a motion vector detection device capable of minimizing a circuit size or processing time for detecting a motion vector while reducing false detection of the motion vector, and an image processing apparatus. In the present invention, a thinning unit (12) thins a plurality of pixels in a targeted area of an input frame to one representative pixel, and then an adaptation degree candidate calculation unit (13) calculates an adaptation degree candidate. With the use of this an adaptation degree candidate, a motion vector candidate calculation unit (14) calculates a motion vector candidate, and a motion vector determination unit (16) detects a motion vector.

F I G . 1

**Description**

Technical Field

The present invention relates to a motion vector detection device that associates the same objects in frames among a plurality of frames with each other to detect a motion vector indicating an amount of movement and distance information of the object, and an image processing apparatus including the same.

Background Art

In a motion vector detection device and an image processing apparatus according to a conventional technology, a motion vector is calculated by, for example, the pattern matching method, gradient method, method using cross-correlation functions and method using Fourier transform (for example, see Non-Patent Document 1).

The motion vectors obtained by using a plurality of frames of different times by those methods can be used in the motion detection such as improving coding efficiency in inter-frame coding, frame interpolation (frame rate conversion, frame addition, deinterlace conversion) and resolution conversion. Further, motion vectors obtained by using a plurality of frames imaged at positions with spatially different viewpoints can be used in applications such as creating range images and three-dimensional images, measuring a distance of an object, and detecting a distance of three-dimensional image coding.

In those applications, in the pattern matching method particularly in wide practical use, for example, an adaptation degree candidate e $(\xi, \eta)$ serving as an indicator for matching of an amount of movement $(\xi, \eta)$ is obtained between two frame signals $g_0$ (x, y) and $g_1$, (x, y) using Equation (1) below.

[Math 1]

$$e(\xi,\eta) = T_{\lim} - \sum_B \left| g_0(x-\xi, y-\eta) - g_1(x,y) \right| \cdots (1)$$

Here, $T_{\lim}$ represents a predetermined threshold when an adaptation degree candidate is calculated by polarity reversion of an error between two frame signals, and luminance signals are used for two frame signals. While calculation is made using an absolute value of a difference between two frame signals in Equation (1), the square of a difference, non-linear characteristics or the like may be used. Alternatively, in place of luminance signals, both of a luminance signal and a color difference signal may be used as two frame signals.

The range B for addition is a block of approximately 8 by 8 pixels. Calculation of Equation (1) is performed for each amount of movement $(\xi, \eta)$ within a search range of movement vector candidates, and an amount of movement $(\xi, \eta)$ of the calculation results by which the adaptation degree candidate e $(\xi, \eta)$ maximized is regarded as a movement vector candidate of the block.

Further, in the method using cross-correlation functions, an amount of movement by which h $(\xi, \eta)$ of Equation (2) below is maximized is obtained as a motion vector candidate.

[Math 2]

$$h(\xi,\eta) = \iint g_0(x-\xi, y-\eta) g_1(x,y) dx dy \cdots (2)$$

As a result of the calculation of a motion vector candidate and an adaptation degree candidate by the above-mentioned method, there are generated a block to which an inappropriate motion vector candidate is assigned and a block to which a motion vector candidate is not assigned (for example, see Patent Document 1). In order to interpolate the block to which a motion vector candidate is not assigned and reduce an error due to an inappropriate motion vector candidate, interpolation processing is performed on the motion vector candidate, to thereby determine a motion vector. In addition, interpolation processing is performed on the adaptation degree candidate, to thereby determine an adaptation degree. In a motion vector detection device and an image processing apparatus according to a conventional technology, in order to determine a motion vector and an adaptation degree, a motion vector and an adaptation degree are determined with the use of the same number of motion vector candidates as adaptation degree candidates present in the same predetermined range. For example, a motion vector and an adaptation degree are determined by Equation (3) and Equation (4) below in Patent Document 2.

[Math 3]

$$v_{i+1}(x_1,y_1) = \frac{\sum\limits_{(x_2,y_2)\in surroundings\ of\ (x_1,y_1)} a_i(x_1,y_1,x_2,y_2)r_i(x_2,y_2)v_i(x_2,y_2)}{\sum\limits_{(x_2,y_2)\in surroundings\ of\ (x_1,y_1)} a_i(x_1,y_1,x_2,y_2)r_i(x_2,y_2)} \cdots (3)$$

[Math 4]

$$r_{i+1}(x_1,y_1) = \frac{\sum\limits_{(x_2,y_2)\in surroundings\ of\ (x_1,y_1)} a_i(x_1,y_1,x_2,y_2)r_i(x_2,y_2)}{\sum\limits_{(x_2,y_2)\in surroundings\ of\ (x_1,y_1)} a_i(x_1,y_1,x_2,y_2)} \cdots (4)$$

In Equation (3) and Equation (4), $a_i(x_1, y_1, x_2, y_2)$ represents a degree of correlation indicating a degree at which motion vectors of two points $(x_1, y_1)$ and $(x_2, y_2)$ are estimated to move in the same direction, $r_i(x_2, y_2)$ represents a reliability candidate (corresponding to an adaptation degree candidate) indicating how much a motion vector candidate at that point is reliable or a degree at which a motion vector candidate satisfies predetermined conditions, and $v_i(x_2, y_2)$ represents a motion vector candidate input in interpolation processing. In addition, $v_{i+1}(x_1, y_1)$ of Equation (3) represents a motion vector determined by interpolation processing, and $r_{i+1}(x_1, y_1)$ of Equation (4) represents the reliability (corresponding to an adaptation degree) determined by interpolation processing. In Equation (3) and Equation (4), as to both of a motion vector and an adaptation degree, the same number of motion vector candidates as adaptation degree candidates of $(x_2, y_2) \in$ surroundings of $(x_1, y_1)$ are averaged, to thereby determine a motion vector and an adaptation degree.

Patent Document 1: Japanese Patent Application Laid-Open No. 2002-27414 (lines 6 to 20 on page 4)
Patent Document 2: Japanese Patent No. 3935500 (Equation 1 and Equation 2 on page 13, FIG. 10 on page 20)
Non-Patent Document 1: Takahiko Fukinuki, "Multi-dimensional signal processing for TV image", 1st edition, Nikkan Kogyo Simbun Sha, Nov. 15, 1988, pp. 193-212

In the pattern matching method and the method using cross-correlation functions, a larger search range of motion vectors increases the number of computation in accordance with an area of a search range, leading to a problem that a circuit size or calculation time is increased. Therefore, in a case of employing the pattern matching method in inter-frame coding, there is widely used a so-called multi-phase search method in which the accuracy of search is firstly made low, matching is performed with accuracy in several pixel units, and matching is repeated while gradually making the accuracy of search close to one pixel unit in the vicinity of the obtained vector.

However, in the motion vector detection by the above-mentioned multi-phase search method, a locally optimum motion vector is obtained because searching is not performed entirely, and thus an optimum motion vector is not necessarily obtained in an entire frame. Accordingly, there is a problem that, depending on the contents of a frame, a larger error is caused as a motion vector compared with a case where searching is performed entirely.

When the multi-phase search method is employed in inter-frame coding, in many cases, there is hardly any problem in image quality even if a locally optimum motion vector is used. However, in a case where the multi-phase search method is employed in frame interpolation, a problem may occur in terms of degradation of image quality. Alternatively, in a case where the multi-phase search method is employed in distance detection, false detection may be a problem.

Disclosure of Invention

An object of the present invention is to provide a motion vector detection device capable of solving the above-mentioned problems and minimizing a circuit size or processing time for detecting a motion vector while reducing false detection of a motion vector, and an image processing apparatus.

A motion vector detection device according to the present invention, which detects, between first and second input frames, a motion vector associating one or more pixels respectively included in the first and second input frames with each other, includes: edge detection means for detecting edge components of each of the input frames; thinning means for thinning a plurality of pixels included in a predetermined targeted area of each of the input frames to one pixel to be representative based on the edge components detected by the edge detection means and outputting this pixel as one representative pixel; adaptation degree candidate calculation means for calculating an adaptation degree candidate to be a candidate for an adaptation degree indicating an adaptation degree of an amount of movement between the first and second input frames, with the use of the one representative pixel of the first input frame and the one representative pixel of the second input frame output from the thinning means; motion vector candidate calculation means for calculating a motion vector candidate to be a candidate for the motion vector between the first and second input frames, based on a position of the one representative pixel output from the thinning means in each input frame and the adaptation degree candidate calculated by the adaptation degree candidate calculation means; storage means for storing the adaptation degree candidate calculated by the adaptation degree candidate calculation means and the motion vector candidate calculated by the motion vector candidate calculation means; and motion vector determination means for determining the adaptation degree and the motion vector based on the adaptation degree candidate and the motion vector candidate stored in the storage means, wherein the storage means calculates a storage address in which the motion vector candidate and the adaptation degree candidate are stored based on the position of the one representative pixel output from the thinning means in each input frame, and stores the motion vector candidate and the adaptation degree candidate in the calculated storage address.

An image processing apparatus according to the present invention includes: the motion vector detection device; and frame rate conversion means for generating a pixel included in an interpolation frame interpolated between the first and second input frames among the pixels included in the first and second input frames based on the motion vector and the adaptation degree detected by the motion vector detection device, to thereby convert a frame rate of an image.

Further, an image processing apparatus according to the present invention includes: the motion vector detection device; and resolution conversion means for generating a new pixel from the pixels included in the first and second input frames based on the motion vector and the adaptation degree detected by the motion vector detection device, to thereby generate a new image having a resolution different from that of an image composed of the first and second input frames.

According to the motion vector detection device of the present invention, the thinning means thins a plurality of pixels included in targeted areas of the first and second input frames to one representative pixel, and then the adaptation degree candidate calculation means calculates an adaptation degree candidate using this one representative pixel. As a result, it is possible to reduce a computation amount for calculating an adaptation degree candidate, and hence a circuit size or processing time for calculating an adaptation degree candidate can be minimized. A motion vector candidate is calculated using this adaptation degree candidate, and a motion vector is detected, whereby a circuit size or processing time for detecting a motion vector can be minimized.

Further, the thinning means thins a plurality of pixels in a targeted area to one representative pixel based on edge components of each input frame detected by the edge detection means, whereby it is possible to reduce deterioration in detection accuracy of a motion vector due to the thinning. Further, the storage means calculates a storage address of the motion vector candidate and the adaptation degree candidate using position information of the one representative pixel of the thinning, and storages the motion vector candidate and the adaptation degree candidate in that storage address, whereby an occurrence of a position error due to the thinning can be reduced. Further, the motion vector determination means determines a motion vector and an adaptation degree from the motion vector candidate and an adaptation degree candidate, and thus an occurrence of an error when determining a motion vector can be reduced.

Accordingly, it is possible to minimize a circuit size or processing time for detecting a motion vector while reducing false detection of a motion vector.

According to the image processing apparatus of the present invention, the image processing apparatus is composed of the excellent motion vector detection device as described above and the frame rate conversion means. The motion vector detection device is capable of minimizing a circuit size or processing time for detecting a motion vector while reducing false detection of a motion vector, whereby it is possible to generate pixels included in an interpolation frame with accuracy. Therefore, there is achieved an image processing apparatus capable of converting a frame rate while reducing deterioration of image quality.

Further, according to the image processing apparatus of the present invention, the image processing apparatus is composed of the excellent motion vector detection device as described above and the resolution conversion means. The motion vector detection device is capable of minimizing a circuit size or processing time for detecting a motion vector while reducing false detection of a motion vector, with the result that an image processing apparatus capable of generating a new image having different resolution while reducing deterioration of image quality can be realized.

These and other objects, features, aspects and advantages of the present invention will become more apparent from the following detailed description of the present invention when taken in conjunction with the accompanying drawings,

Brief Description of Drawings

FIG. 1 is a block diagram showing a configuration of a motion vector detection device 1 according to a first embodiment of the present invention.

FIG. 2 is a diagram showing an example of one representative pixel.

FIG. 3 is a block diagram showing a configuration of a motion vector candidate calculation unit 14.

FIG. 4 is a diagram for describing a phase Fph of an interpolation frame.

FIG. 5 is a block diagram showing a configuration of a storage unit 15.

FIG. 6 is a diagram for describing a pair in a case where a point on one frame is fixed and points on the other frame are dispersed.

FIG. 7 is a diagram for describing a pair in a case where points on both frames are dispersed point-symmetrically.

FIG. 8 is a block diagram showing a configuration of a motion vector determination unit 16.

FIG. 9 is a diagram for describing a center pixel CP1 in which a motion vector is stored.

FIG. 10 is a diagram for describing a center pixel CP2 in which an adaptation degree is stored.

FIG. 11 is a diagram showing the relationship between an obtained motion vector and interpolation processing.

FIG. 12 is a diagram showing the relationship between an obtained adaptation degree and interpolation processing.

FIG. 13 is a block diagram showing a configuration of a storage unit 15A of a motion vector detection device according to a second embodiment of the present invention.

FIG. 14 is a block diagram showing a configuration of an image processing apparatus 60 according to a third embodiment of the present invention.

FIG. 15 is a block diagram showing a configuration of a frame rate conversion unit 63.

FIG. 16 is a diagram for describing reference coordinates.

FIG. 17 is a diagram for describing the generation of a pixel of an interpolation frame IF.

FIG. 18 is a block diagram showing a configuration of an image processing apparatus 80 according to a fourth embodiment of the present invention.

FIG. 19 is a diagram for describing an operation of a resolution conversion unit 82.

FIG. 20 is a diagram for describing the operation of the resolution conversion unit 82.

Best Modes for Carrying Out the Invention

First embodiment

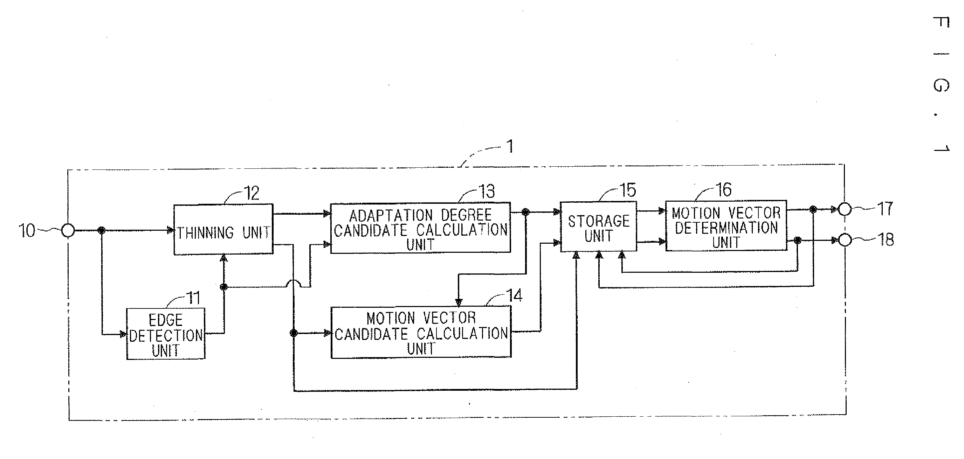

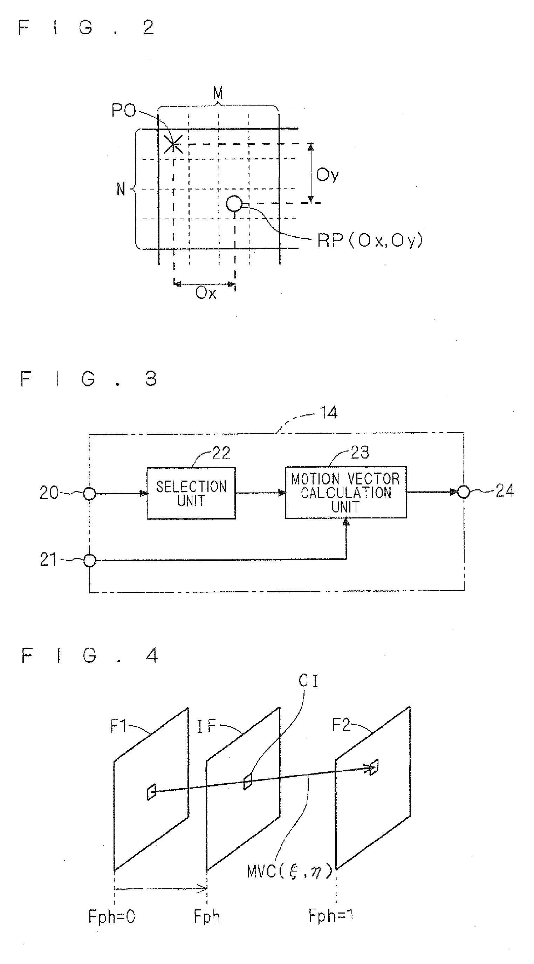

FIG. 1 is a block diagram showing a configuration of a motion vector detection device 1 according to a first embodiment of the present invention. FIG. 2 is a diagram showing an example of one representative pixel. The motion vector detection device 1 detects, in a plurality of frames to be input, a motion vector that associates one or more pixels with each other respectively included in a plurality of frames. Specifically, the motion vector detection device 1 detects, among frames to be input (hereinafter, also referred to as "input frames"), a motion vector that associates one or more pixels with each other respectively included in first and second input frames between two input frames to be targeted, that is, the first and second input frames.

The motion vector detection device 1 detects in, for example, a moving image, an image motion vector indicating a motion of an object a screen and detects a motion vector between a first frame and a second frame that are based on a chronological relationship. The motion vector detected by this motion vector detection device 1 is used in, for example, an image stabilizer of a camcorder. An image signal of the frame input to the motion vector detection device 1 is read by performing pixel scan in a horizontal direction and line scan in a vertical direction.

The motion vector detection device 1 according to the present embodiment includes an input terminal 10, an edge detection unit 11, a thinning unit 12, an adaptation degree candidate calculation unit 13, a motion vector candidate calculation unit 14, a storage unit 15, a motion vector determination unit 16, a first output terminal 17 and a second output terminal 18.

The input terminal 10 receives image data such as moving image data obtained by, for example, an image sensor in a camcorder. The image data input to the input terminal 10 includes a plurality of frames and is input to the edge detection unit 11 and the thinning unit 12 in frame.

The edge detection unit 11 detects edge components in a horizontal direction and a vertical direction from image signals of the input plurality of frames. The edge detection unit 11 provides the detected edge components to the thinning unit 12 and the adaptation degree candidate calculation unit 13. The edge detection unit 11 is equivalent to edge detection means.

The thinning unit 12 thins a plurality of pixels included in a targeted area set in advance in the input frame and outputs one pixel to be representative as one representative pixel. Specifically, the thinning unit 12 calculates an edge strength value using the edge components provided by the edge detection unit 11 and, among a plurality of pixels in the input frame, outputs the pixel with the largest edge strength value as one representative pixel as shown in FIG. 2. Further, the thinning unit 12 outputs a position of one representative pixel. The thinning unit 12 provides an image signal indicating the one representative pixel and its position to the adaptation degree candidate calculation unit 13, the motion vector candidate calculation unit 14 and the storage unit 15. The thinning unit 12 is equivalent to thinning means.

The adaptation degree candidate calculation unit 13 obtains an adaptation degree candidate based on the image signals of two representative pixels regarding two input frames provided by the thinning unit 12. More specifically, the adaptation degree candidate calculation unit 13 calculates, with the use of the one representative pixel output from the thinning unit 12, an adaptation degree candidate that becomes a candidate for an adaptation degree indicating an adaptation degree of an amount of movement between two input frames. The adaptation degree candidate calculation unit 13 provides the calculated adaptation degree candidate to the motion vector candidate calculation unit 14 and the storage unit 15. The adaptation degree candidate calculation unit 13 is equivalent to adaptation degree candidate calculation means.

The motion vector candidate calculation unit 14 calculates a motion vector candidate that becomes a candidate for the motion vector between two input frames from the adaptation degree candidate provided by the adaptation degree candidate calculation unit 13 and the position of the one representative pixel provided by the thinning unit 12. The motion vector candidate calculation unit 14 provides the calculated motion vector candidate to the storage unit 15. The motion vector candidate calculation unit 14 is equivalent to motion vector candidate calculation means.

The storage unit 15 calculates a storage address from the motion vector candidate provided by the motion vector candidate calculation unit 14, the position of the one representative pixel provided by the thinning unit 12 and a phase of the interpolation frame. The storage unit 15 stores, in the calculated storage address, the motion vector candidate provided by the motion vector candidate calculation unit 14 and the adaptation degree candidate provided by the adaptation degree candidate calculation unit 13. In addition, the storage unit 15 outputs a motion vector candidate and an adaptation degree candidate in a predetermined range every time storage processing in a predetermined range is finished. Further, the storage unit 15 stores the motion vector and an adaptation degree provided by the motion vector determination unit 16 described below. The storage unit 15 is equivalent to storage means.

The motion vector determination unit 16 determines a motion vector and an adaptation degree based on the motion vector candidate and the adaptation degree candidate provided by the storage unit 15. The motion vector determined by the motion vector determination unit 16 is provided to the storage unit 15 and is output from the first output terminal 17. The adaptation degree determined by the motion vector determination unit 16 is provided to the storage unit 15 and is output from the second output terminal 18. The motion vector determination unit 16 is equivalent to motion vector determination means.

Next, operations of the respective units of the motion vector detection device 1 are specifically described. First, the operation of the edge detection unit 11 shown in FIG. 1 is described. The edge detection unit 11 detects the edge components in the horizontal direction and the vertical direction from the image signals of a plurality of input frames and provides those to the thinning unit 12. The edge components may be detected with, for example, a first derivation filter such as a Prewitte filter and a Sobel filter, or may be detected with a first derivation filter and a second derivation filter in combination. Specifically, the edge components are obtained by calculation in accordance with Equation (5) below.

[Math 5]

$$E'_x \frac{d}{dx} = g(x, y),\ E'_y = \frac{d}{dy} g(x, y),\ E''_x = \frac{d^2}{dx^2} g(x, y),\ E'' y = \frac{d^2}{dy^2} g(x, y) \cdots (5)$$

In Equation (5), g (x, y) represents an image signal of coordinates (x, y) of the input frame and, for example, luminance is used. $E'_x$ represents an edge component in a horizontal direction detected by the first derivation filter (hereinafter, referred to as "horizontal first derivation edge component"), and $E'_y$ represents an edge component in a vertical direction detected by the first derivation filter (hereinafter, referred to as "vertical first derivation edge components"). $E''_x$ represents an edge component in a horizontal direction detected by the second derivation filter (hereinafter, referred to as "horizontal second derivation edge component"), and $E''_y$ represents an edge component in a vertical direction detected by the second derivation filter (hereinafter, referred to as "vertical second derivation edge component").

Next, the operation of the thinning unit 12 shown in FIG. 1 is described. The thinning unit 12 calculates an edge strength value using the edge components provided by the edge detection unit 11 and, as shown in FIG. 2, outputs a pixel with the largest edge strength value among a plurality of pixels of the input frame as one representative pixel. Specifically, the thinning unit 12 leaves, among a plurality of pixels in a targeted area composed of M (M is an integer equal to or larger than one) pixels in a horizontal direction and N (N is an integer equal to or larger than one) pixels in a vertical direction of the input frame, only the pixel with the largest edge strength value and outputs it as one representative pixel. The thinning unit 12 discards the other pixels in the targeted area composed of M pixels in the horizontal direction and N pixels in the vertical direction. The edge strength value is obtained by, for example, $C1(|E'_x|+|E'_y|)+C2(|E''_x|+|E''_y|)$, where C1 and C2 represent predetermined constants. Further, as shown in FIG. 2, the thinning unit 12 outputs a position RP $(O_x, O_y)$ of one representative pixel that has moved from an offset reference point PO by $O_x$ in the horizontal direction and by $O_y$ in the vertical direction. Note that in place of regarding the pixel with the largest edge strength value as one representative pixel, a pixel at a predetermined position in a targeted area, for example, an upper-left pixel in the targeted area may be regarded as one representative pixel. While this case is inferior in detection accuracy to the case where the pixel with the largest edge strength value is regarded as one representative pixel in some cases, an effect of computation amount reduction owing to thinning to one representative pixel is found as well.

Next, the operation of the adaptation degree candidate calculation unit 13 shown in FIG. 1 is described. Similarly to the pattern matching method of the conventional technology, the adaptation degree candidate calculation unit 13 obtains an adaptation degree candidate e $(\xi_M, \eta_N)$ that is an indicator of matching of an amount of movement $(\xi_M, \eta_N)$ between image signals $g_0(x, y)$ and $g_1(x, y)$ of two representative pixels provided by the thinning unit 12 as to two input frames and provides them to the motion vector candidate calculation unit 14 and the storage unit 15. In this case, reference symbols M and N are added to lower-right of $\xi$ and $\eta$ for indicating that $(\xi_M, \eta_N)$ represents coordinates after thinning to the one representative pixel provided by the thinning unit 12. The same holds true for the method using cross-correlation functions.

Here, pixel matching is performed in a case where the adaptation degree candidate e is calculated between pixels, and block matching is performed in a case where the adaptation degree candidate e is calculated between a plurality of pixels of, for example, p pixels in the horizontal direction and q pixels in the vertical direction (p and q are integers; any one of p and q is two or larger while the other is one or larger). Normally, false detection can be reduced more by block matching than pixel matching; however, an excessive increase of p and q each being the number of pixels leads to a drawback that false detection is more likely to occur at a boundary of an object. Moreover, a calculation amount is increased along with an increase of the number of pixels.

The adaptation degree candidate calculation unit 13 can also calculate an adaptation degree candidate using the edge components provided by the edge detection unit 11. Accordingly, an adaptation degree candidate is calculated from both of image signals and edge components, which makes it possible to improve the detection accuracy of the motion vector candidate. For example, the adaptation degree candidate e $(\xi_M, \eta_N)$ that is an indicator of matching of an amount of movement $(\xi_M, \eta_N)$ is obtained using Equation (6) below between two image signals and edge components $(g_0(x, y), E'_{x0}(x, y), E'_{y0}(x, y), E''_{x0}(x, y), E''_{y0}(x, y))$ and $(g_1(x, y), E'_{x1}(x, y), E'_{y1}(x, y), E''_{x1}(x, y), E''_{y1}(x, y))$.

[Math 6]

$$e(\xi_M, \eta_N) = T_{lim} - \sum_B (C_{my}|g_0(x - \xi_M, y - \eta_N) - g_1(x, y)|$$
$$+ C_{m1}(|E'_{x0}(x - \xi_M, y - \eta_N) - E'_{x1}(x, y)| + |E'_{y0}(x - \xi_M, y - \eta_N) - E'_{y1}(x, y)|)$$
$$+ C_{m2}(|E''_{x0}(x - \xi_M, y - \eta_N) - E''_{x1}(x, y)| + |E''_{y0}(x - \xi_M, y - \eta_N) - E''_{y1}(x, y)|))$$
$$\cdots (6)$$

In Equation (6), $C_{my}$, $C_{m1}$ and $C_{m2}$ represent predetermined constants. In addition, (x, y) represents coordinates after thinning to one representative pixel provided by the thinning unit 12.

With the above-mentioned configuration, the adaptation degree candidate is computed also with edge information, whereby it is possible to improve the detection accuracy of a motion vector in pixel matching between pixels or matching between fewer pixels as in a small size of p×q blocks.

Further, $F_x$ and $F_y$ indicating the magnitude of the edge components, which are shown by Equation (7) below, can be added to the adaptation degree candidate e ($\xi_M$, $\eta_N$) to make a computation equation more suitable for a case of large edge components.

[Math 7]

$$\begin{aligned} F_x(\xi_M, \eta_N) &= C_{ex}\left(\frac{\left|E'_{x0}(x - \xi_M, y - \eta_N) + E'_{x1}(x, y)\right|}{2} - T_{ex}\right) \\ F_y(\xi_M, \eta_N) &= C_{ey}\left(\frac{\left|E'_{y0}(x - \xi_M, y - \eta_N) + E'_{y1}(x, y)\right|}{2} - T_{ey}\right) \end{aligned} \right\} \cdots (7)$$

In Equation (7), $C_{ex}$, $C_{ey}$, $T_{ex}$ and $T_{ey}$ represent predetermined constants. $F_x$ ($\xi_M$, $\eta_N$) and $F_y$ ($\xi_M$, $\eta_N$) are both limited so as to be equal to or smaller than zero and then added to the adaptation degree candidate e ($\xi_M$, $\eta_N$), to thereby calculate a horizontal component $e_x$ ($\xi_M$, $\eta_N$) and a vertical component $e_y$ ($\xi_M$, $\eta_N$) of the adaptation degree candidate in accordance with Equation (8) below.

[Math 8]

$$\begin{aligned} e_x(\xi_M, \eta_N) &= e(\xi_M, \eta_N) + \min\{Fx(\xi_M, \eta_N), 0\} \\ e_y(\xi_M, \eta_N) &= e(\xi_M, \eta_N) + \min\{Fy(\xi_M, \eta_N), 0\} \end{aligned} \right\} \cdots (8)$$

Next, the operation of the motion vector candidate calculation unit 14 shown in FIG. 1 is described. The motion vector candidate calculation unit 14 calculates a motion vector candidate from the adaptation degree candidate provided by the adaptation degree candidate calculation unit 13 and the position of the one representative pixel provided by the thinning unit 12 and outputs it.

FIG. 3 is a block diagram showing a configuration of the motion vector candidate calculation unit 14. The motion vector candidate calculation unit 14 includes a first input terminal 20, a second input terminal 21, a selection unit 22, a motion vector calculation unit 23 and an output terminal 24. The adaptation degree candidates provided by the adaptation degree candidate calculation unit 13 are provided to the selection unit 22 through the first input terminal 20. The selection unit 22 selects one with the largest adaptation degree among the adaptation degree candidates, outputs the amount of movement ($\xi_M$, $\eta_N$) corresponding to the selected adaptation degree candidate, and provides it to the motion vector calculation unit 23. As to the selection of one with the largest adaptation degree, one with the largest adaptation degree candidate e ($\xi_M$, $\eta_N$) is selected in the pattern matching method, and similarly, one with the largest adaptation degree candidate h ($\xi_M$, $\eta_N$) is selected in the method using cross-correlation functions.

The motion vector calculation unit 23 calculates the motion vector candidate from the amount of movement ($\xi_M$, $\eta_N$) provided by the selection unit 22 and the position RP ($O_x$, $O_y$) of the one representative pixel provided by the thinning unit 12 through the second input terminal 21 and outputs it. In a case where ($O_{1x}$, $O_{1y}$) represents a position of one representative pixel of a first input frame (hereinafter, also simply referred to as "first frame") of a plurality of input frames to the motion vector detection device 1, in this present embodiment, of two input frames, and ($O_{2x}$, $O_{2y}$) represents a position of one representative pixel of a second input frame (hereinafter, also simply referred to as "second frame"), the motion vector calculation unit 23 calculates the motion vector candidate ($\xi$, $\eta$) from the first frame to the second frame in accordance with, for example, Equation (9) below.

[Math 9]

$$\xi = \xi_M \cdot M + (O_{2x} - O_{1x}), \eta = \eta_N \cdot N + (O_{2y} - O_{1y}) \cdots (9)$$

Next, the operation of the storage unit 15 shown in FIG. 1 is described. The storage unit 15 calculates a storage address from the motion vector candidate provided by the motion vector candidate calculation unit 14, the position of the one representative pixel provided by the thinning unit 12 and the phase of the interpolation frame. The storage unit 15 stores the motion vector candidate and the adaptation degree candidate provided by the adaptation degree candidate calculation unit 13 in the calculated storage address. In addition, the storage unit 15 outputs the motion vector candidate and the adaptation degree candidate in a predetermined area every time storing of the motion vector candidate and the adaptation degree candidate in the predetermined area of the frame is finished. Further, the storage unit 15 stores the motion vector and the adaptation degree provided by the motion vector determination unit 16.

FIG. 4 is a diagram for describing a phase Fph of the interpolation frame. The phase Fph of an interpolation frame IF represents the time for obtaining a motion vector relative to a first frame F1 and a second frame F2 input to the motion vector detection device 1. When the phase Fph of the first frame F1 is 0 and the phase Fph of the second frame F2 is 1, 0≤Fph≤1 in the case of interpolation, and in the case of extrapolation, Fph is outside the range of interpolation. As to a motion vector candidate MVC ($\xi$, $\eta$) from the first frame F1 to the second frame F2, coordinates CI in the interpolation frame IF are calculated, a storage address corresponding thereto is calculated, and the motion vector candidate and the adaptation degree candidate are stored in the calculated storage address.

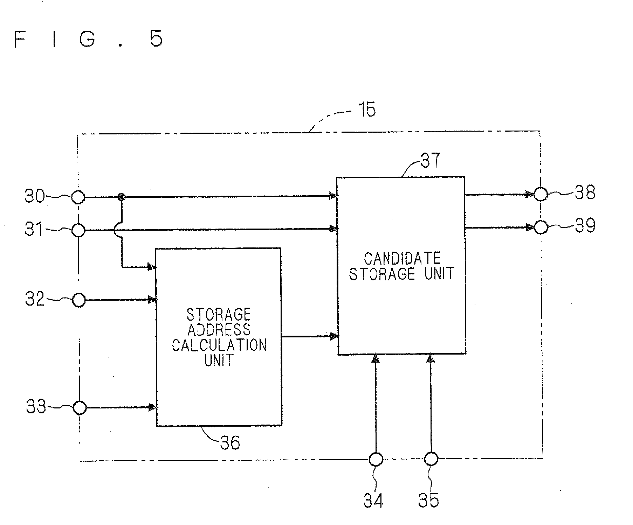

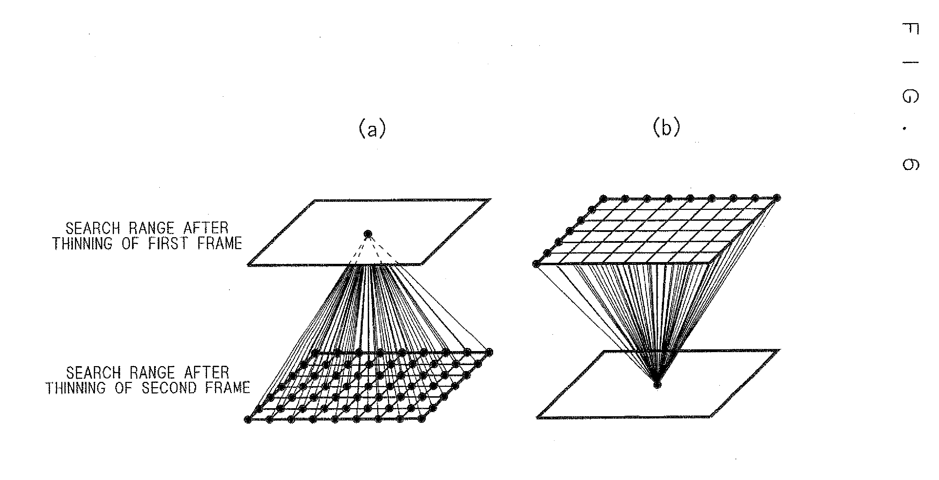

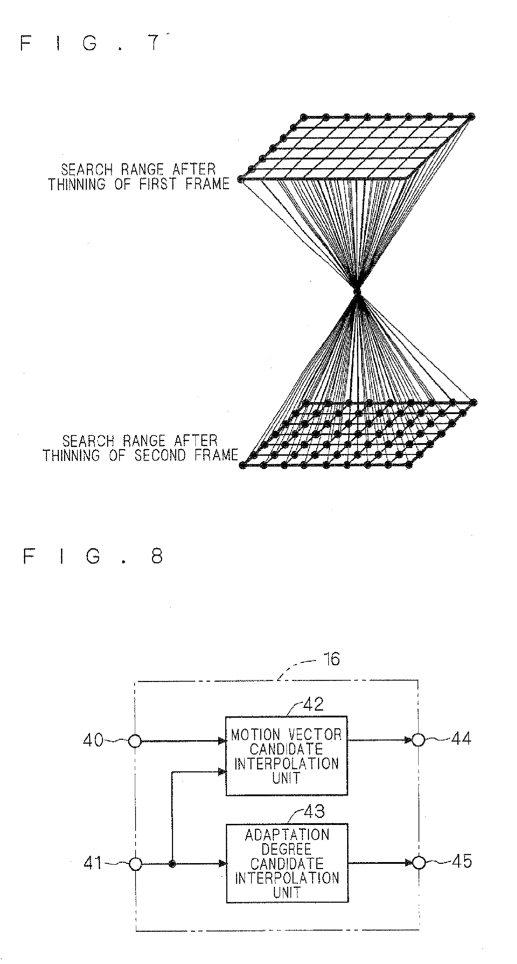

FIG. 5 is a block diagram showing a configuration of the storage unit 15. FIG. 6 is a diagram for describing a pair in a case where a point on one frame is fixed and only points on the other frame are dispersed. FIG. 6(a) is a diagram showing a case where the point on the first frame is fixed and the points on the second frame are dispersed, and FIG. 6(b) is a diagram in a case where the point on the second frame is fixed and only the points on the first frame are dispersed. FIG. 7 is a diagram for describing a pair in a case where the points on both frames are dispersed point-symmetrically. The storage unit 15 includes a first input terminal 30, a second input terminal 31, a third input terminal 32, a fourth input terminal 33, a fifth input terminal 34, a sixth input terminal 35, a storage address calculation unit 36, a candidate storage unit 37, a first output terminal 38 and a second output terminal 39.

The storage address calculation unit 36 calculates coordinates of the motion vector candidate at the phase Fph of the interpolation frame IF from the motion vector candidate provided by the motion vector candidate calculation unit 14 through the first input terminal 30, the position of one representative pixel provided by the thinning unit 12 through the fourth input terminal 33, and the phase Fph of the interpolation frame IF provided through the third input terminal 32, and calculates and outputs a storage address corresponding thereto.

The candidate storage unit 37 stores, in the storage address provided by the storage address calculation unit 36, the motion vector candidate provided by the motion vector candidate calculation unit 14 through the first input terminal 30 and the adaptation degree candidate provided by the adaptation degree candidate calculation unit 13 through the second input terminal 31. In addition, the candidate storage unit 37 outputs the motion vector candidate in the predetermined targeted area from the first output terminal 38 and outputs the adaptation degree candidate in the predetermined targeted area from the second output terminal 39 every time storing of the motion vector candidate and the adaptation degree candidate in the predetermined targeted area of the frame is finished. Further, the candidate storage unit 37 stores the motion vector provided by the motion vector determination unit 16 through the fifth input terminal 34 and the adaptation degree provided by the motion vector determination unit 16 through the sixth input terminal 35, which is described below.

Next, a specific operation of the storage address calculation unit 36 shown in FIG. 5 is described. The storage address calculation unit 36 calculates coordinates in the interpolation frame from the motion vector candidate to be input, the position of the one representative pixel and the phase of the interpolation frame, and calculates and outputs a storage address corresponding thereto. Coordinates ($R_{1x}$, $R_{1y}$) and ($R_{2x}$, $R_{2y}$) in the interpolation frame are obtained in accordance with, for example, Equation (10) below.

[Math 10]

$$\left. \begin{array}{l} R_{1x} = M \cdot x + O_{1x} + \xi \cdot F_{ph}, R_{1y} = N \cdot y + O_{1y} + \eta \cdot F_{ph} \\ R_{2x} = M \cdot x + O_{2x} + \xi \cdot (1 - F_{ph}), R_{2y} = N \cdot y + O_{2y} + \eta \cdot (1 - F_{ph}) \end{array} \right\} \cdots (10)$$

In Equation (10), (x, y) represents coordinates of one representative pixel output from the thinning unit 12, ($O_{1x}$, $O_{1y}$) represents a position of one representative pixel of the first frame F1, ($O_{2x}$, $O_{2y}$) represents a position of one representative pixel of the second frame F2, Fph represents a phase of the interpolation frame IF, and ($\xi$, $\eta$) represents a motion vector candidate.

The reason why there are two sets of coordinates in the interpolation frame, ($R_{1x}$, $R_{1y}$) and ($R_{2x}$, $R_{2y}$), is that there exist a motion vector candidate obtained by searching the points on the second frame with the point on the first frame being a fixed point as shown in FIG. 6(a), and a motion vector candidate obtained by searching the points on the first frame with the point on the second frame being a fixed point as shown in FIG. 6(b). FIG. 6 shows the case where the point on one of frames is fixed and only points on the other of frames are dispersed to search for a motion vector, which is also similar in the case where the points on both frames are dispersed point-symmetrically to search for a motion vector as shown in FIG. 7, considering the fact that an amount of movement is doubled.

Storage addresses $A_1$ and $A_2$ are calculated from the coordinates ($R_{1x}$, $R_{1y}$) and ($R_{2x}$, $R_{2y}$) in the interpolation frame in accordance with, for example, Equation (11) below.

[Math 11]

$$A_1 = R_{1y} \cdot HSZ + R_{1x}, A_2 = R_{2y} \cdot HSZ + R_{2x} \cdots (11)$$

In Equation (11), HSZ represents the number of horizontal pixels and, for example, is 320. In addition, as shown by Equation (12) below, among a plurality of pixels included in the targeted area composed of M pixels in a horizontal direction and N pixels in a vertical direction, the storage addresses A1 and A2 can also be calculated with the use of the coordinates generated by thinning the pixels corresponding to the horizontal direction of the first and second frames to one representative pixel, specifically, by thinning the M pixels in the horizontal direction to one representative pixel. In this case, a circuit size of the candidate storage unit 37 can be made smaller.

[Math 12]

$$A_1 = R_{1y} \cdot (HSZ / M) + (R_{1x} / M), A_2 = R_{2y} \cdot (HSZ / M) + (R_{2x} / M) \cdots (12)$$

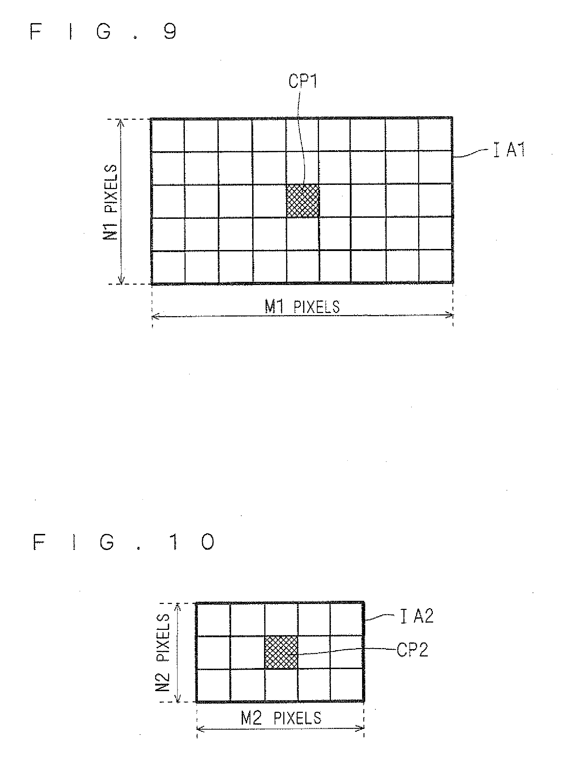

Next, the operation of the motion vector determination unit 16 shown in FIG. 1 is described. FIG. 8 is a block diagram showing the configuration of the motion vector determination unit 16. FIG. 9 is a diagram for describing a center pixel CP1 in which a motion vector is stored. FIG. 10 is a diagram for describing a center pixel CP2 in which an adaptation degree is stored. The motion vector determination unit 16 determines a motion vector and an adaptation degree from the motion vector candidates and adaptation degree candidates provided by the storage unit 15 and outputs them. The motion vector determination unit 16 includes a first input terminal 40, a second input terminal 41, a motion vector candidate interpolation unit 42, an adaptation degree candidate interpolation unit 43, a first output terminal 44 and a second output terminal 45.

The motion vector candidate interpolation unit 42 determines a motion vector by interpolation processing from the motion vector candidate provided by the storage unit 15 through the first input terminal 40 and the adaptation degree candidate provided by the storage unit 15 through the second input terminal 41. The motion vector determined by the motion vector candidate interpolation unit 42 is output from the first output terminal 44. The adaptation degree candidate interpolation unit 43 performs interpolation processing on the adaptation degree candidate provided by the storage unit 15 through the second input terminal 41, to thereby determine the adaptation degree. The adaptation degree determined by the adaptation degree candidate interpolation unit 43 is output from the second output terminal 45.

Next, a specific operation of the motion vector candidate interpolation unit 42 shown in FIG. 8 is described. The motion vector candidate interpolation unit 42 determines a motion vector by interpolation processing from the motion vector candidate and the adaptation degree candidate provided by the storage unit 15. Specifically, the motion vector candidate interpolation unit 42 determines a motion vector of the center pixel CP1 in a motion vector interpolation range IA1 using motion vector candidates and adaptation degree candidates in the motion vector interpolation range IA1 in an area of M1 (M1 is an integer of one or larger) pixels in a horizontal direction and N1 (N1 is an integer of one or larger) pixels in a vertical direction shown in FIG. 9. The motion vector of the center pixel CP1 is determined by performing interpolation processing in accordance with, for example, Equation (13) below.

[Math 13]

$$\xi_i(x,y) = \frac{\displaystyle\sum_{(u,v)\in interpolation\ range} \xi(u,v)\cdot e(u,v)}{S} \\ \eta_i(x,y) = \frac{\displaystyle\sum_{(u,v)\in interpolation\ range} \eta(u,v)\cdot e(u,v)}{S} \Bigg\} \cdots (13)$$

In Equation (13), $\xi_i$ (x, y) represents a horizontal component of the motion vector in a center pixel (x, y), $\eta_i$ (x, y) represents a vertical component of the motion vector in the center pixel (x, y), $\xi$ (u, v) represents a horizontal component of the motion vector candidate at the coordinates (u, v), $\eta$ (u, v) represents a vertical component of the motion vector candidate at the coordinates (u, v), and e (u, v) represents an adaptation degree candidate at the coordinates (u, v). The motion vector interpolation range IA1 represents the area of M1 pixels in the horizontal direction and N1 pixels in the vertical direction. In addition, as shown in Equation (14) below, S represents the sum of the adaptation degree candidates e (u, v) present in the area of M1 pixels in the horizontal direction and N1 pixels in the vertical direction, which is the motion vector interpolation range IA1.
[Math 14]

$$S = \sum_{(u,v)\in interpolation\ range} e(u,v) \cdots (14)$$

By determining the motion vector as described above, the motion vector is interpolated for the storage address where the motion vector candidate is not stored in the storage unit 15, and an error caused by an inappropriate motion vector candidate is reduced by interpolation, whereby it is possible to determine a motion vector with higher accuracy. Further, division of Equation (13) is performed in accordance with the number of adaptation degree candidates e (u, v) present in the area of M1 pixels in the horizontal direction and N1 pixels in the vertical direction, which is the motion vector interpolation range IA1. Accordingly, in a case where there are few motion vector candidates and adaptation degree candidates present in the area of M1 pixels in the horizontal direction and N1 pixels in the vertical direction, the motion vector to be determined can be prevented from becoming small. As a result, it is possible to determine a motion vector with higher accuracy.
Further, the motion vector can be determined with the use of the adaptation degree candidate having components in a horizontal direction and a vertical direction shown in Equation (8). On this occasion, the motion vector is determined by calculating a horizontal component of the motion vector from the horizontal component of the motion vector candidate and the horizontal component of the adaptation degree candidate and calculating a vertical component of the motion vector from the vertical component of the motion vector candidate and the vertical component of the adaptation degree candidate. For example, the motion vector is determined in accordance with Equation (15) below with the use of a horizontal component $e_x$ (u, v) of the adaptation degree candidate and a vertical component $e_y$ (u, v) of the adaptation degree candidate.
[Math 15]

$$\xi_i(x,y) = \frac{\displaystyle\sum_{(u,v)\in interpolation\ range} \xi(u,v)\cdot e_x(u,v)}{S_x}$$

$$\eta_i(x,y) = \frac{\displaystyle\sum_{(u,v)\in interpolation\ range} \eta(u,v)\cdot e_y(u,v)}{S_y}$$

$$\cdots (15)$$

$S_x$ and $S_y$ of Equation (15) are determined by Equation (16) below.
[Math 16]

$$S_x = \sum_{(u,v)\in interpolation\ range} e_x(u,v),\ Sy = \sum_{(u,v)\in interpolation\ range} e_y(u,v) \cdots (16)$$

As can be seen from the above, the horizontal component of the motion vector is weighted by a horizontal component of an edge component of an input frame, and the vertical component of the motion vector is weighted by a vertical component of the edge component of the input frame, whereby it is possible to determine a motion vector with higher accuracy that is based on motions of respective profiles in a horizontal direction and a vertical direction.
Further, the motion vector can be determined using a position (u-x, v-y) from the center. For example, the motion vector is determined in accordance with Equation (17) below.
[Math 17]

$$\xi_i(x,y) = \frac{\displaystyle\sum_{(u,v)\in interpolation\ range} \xi(u,v)\cdot e(u,v)\cdot\frac{1}{r}}{S}$$

$$\eta_i(x,y) = \frac{\displaystyle\sum_{(u,v)\in interpolation\ range} \eta(u,v)\cdot e(u,v)\cdot\frac{1}{r}}{S}$$

$$\cdots (17)$$

In Equation (17), r is determined by Equation (18) below.
[Math 18]

$$r = \sqrt{(u-x)^2 + (v-y)^2} \cdots (18)$$

As can be seen from the above, the distance from the center pixel is reflected on the motion vector as well, and thus it is possible to obtain a motion vector with higher accuracy in which a vicinity of the center pixel is emphasized.
In this case, it is also possible to make r=|u-x|+|u-y|. While the reciprocal of r is multiplied in Equation (17), other function that decreases along with an increase of r may be multiplied. Moreover, in place of multiplying the reciprocal of r as to the horizontal component as well as the vertical component, the function that decreases along with an increase of |u-x| and the function that decreases along with an increase of |u-y| may be multiplied in the calculation of a horizontal

direction $\xi_i$ and the calculation of a vertical direction $\eta_i$, respectively.

Next, a specific operation of the adaptation degree candidate interpolation unit 43 shown in FIG. 8 is described. The adaptation degree candidate interpolation unit 43 determines the adaptation degree by interpolation processing of the adaptation degree candidate provided by the storage unit 15. The adaptation, degree candidate interpolation unit 43 determines the adaptation degree of the center pixel CP2 with the use of adaptation degree candidates in an adaptation degree interpolation range IA2 that is an area of M2 (M2 is an integer equal to or larger than one) pixels in a horizontal direction and N2 (N2 is an integer equal to or larger than one) pixels in a vertical direction shown in FIG. 10. The adaptation degree of the center pixel CP2 is determined by interpolation processing in accordance with, for example, Equation (19) below.

[Math 19]

$$e_i(x, y) = \frac{\sum_{(u,v) \in interpolation\ range} e(u,v)}{S_e} \cdots (19)$$

In Equation (19), $e_i(x, y)$ represents the adaptation degree of the center pixel (x, y), and e (u, v) represents the adaptation degree candidate in the coordinates (u, v). In addition, $S_e$ of Equation (19) represents the number of M2×N2 pixels in the area of M2 pixels in a horizontal direction and N2 pixels in a vertical direction. This makes the interpolation processing simple average, and thus the adaptation degree to be determined becomes smaller as there are fewer adaptation degree candidates present in the area of M2 pixels in a horizontal direction and N2 pixels in a vertical direction, which is the adaptation degree interpolation range IA2. Accordingly, the adaptation degree of the pixel can be made small when few motion vector candidates capable of being used for determination of a motion vector are present in its surroundings, which makes it possible to determine the adaptation degree with higher accuracy.

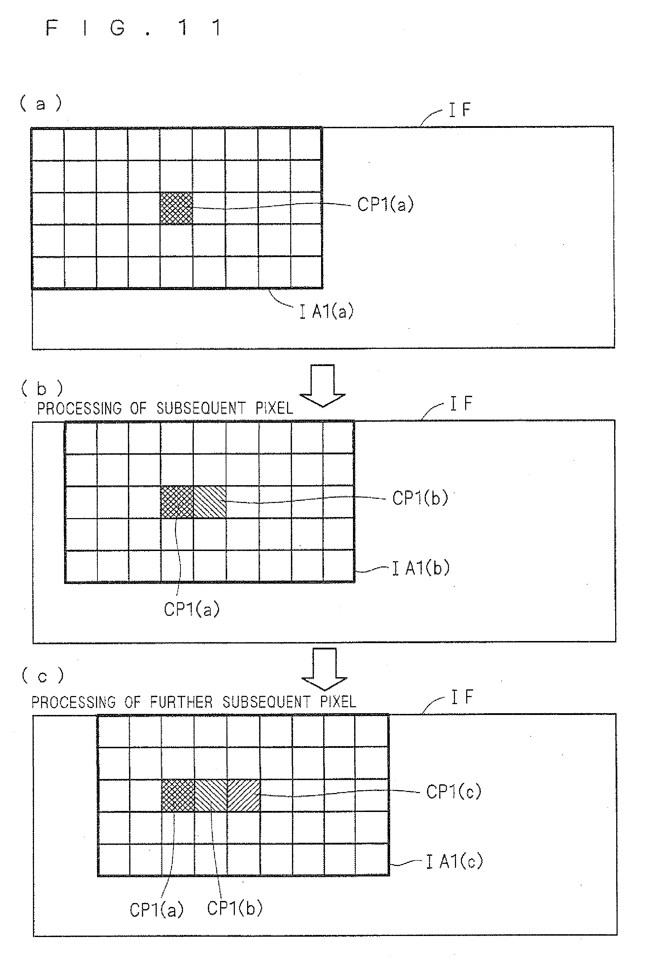

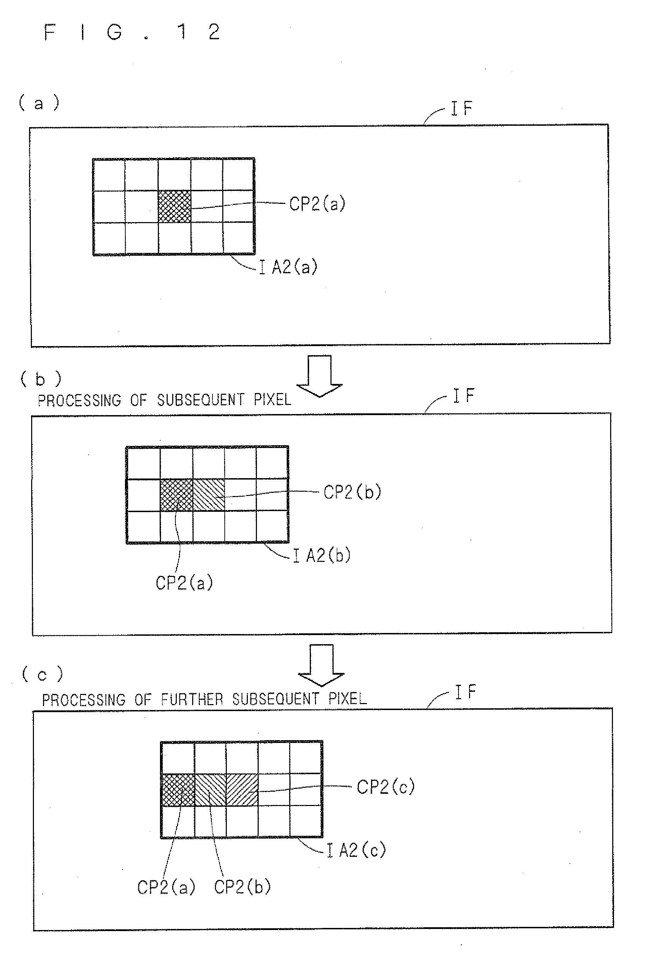

FIG. 11 is a diagram showing the relationship between the obtained motion vector and interpolation processing. FIG. 12 is a diagram showing the relationship between the obtained adaptation degree and interpolation processing. The storage unit 15 of the motion vector detection device 1 shown in FIG. 1 is configured to store the motion vector as well as adaptation degree provided by the motion vector determination unit 16. The candidate storage unit 37 constituting the storage unit 15 shown in FIG. 5 stores the motion vector provided by the motion vector determination unit 16 through the fifth input terminal 34 and the adaptation degree provided by the motion vector determination unit 16 through the sixth input terminal 35. On this occasion, the stored motion vector candidate is overwritten with the motion vector, and the motion vector is stored in the storage address corresponding to the center pixel CP1 shown in FIG. 9. The stored adaptation degree candidate is overwritten with the adaptation degree, and the adaptation degree is stored in the storage address corresponding to the center pixel CP2 shown in FIG. 10.

To be specific, for example, as shown in FIG. 11 (a), the motion vector obtained with respect to a center pixel CP 1 (a) of a first motion vector interpolation range IA1(a) is stored by overwriting in the corresponding storage address in the interpolation frame IF. This motion vector is used when obtaining a motion vector of a center pixel CP 1 (b) of a second motion vector interpolation range IA1(b) in the processing for the subsequent pixel as shown in FIG. 11(b) and, further as shown in FIG. 11(c) is used when obtaining a motion vector of a center pixel CP1(c) of a third motion vector interpolation range IA1(c) in the processing for the further subsequent pixel. When the motion vector of the center pixel CP1(c) of the third motion vector interpolation range IA1(c) is obtained, the motion vector of the center pixel CP1(b) in the second motion vector interpolation range IA1(b) is used as well.

Similarly, as to the adaptation degree, for example, as shown in FIG. 12(a), the adaptation degree obtained with respect to the center pixel CP2(a) in the first adaptation degree interpolation range IA2(a) is stored by overwriting in the corresponding storage address of the interpolation frame IF, and is used when obtaining the adaptation degree of the center pixel CP2(b) in the second adaptation degree interpolation range IA2(b) shown in FIG. 12(b) and when obtaining the adaptation degree of the center pixel CP2(c) in the third adaptation degree interpolation range IA2(c) shown in FIG. 12(c). Further, the adaptation degree of the center pixel CP2(b) in the second adaptation degree interpolation range IA2(b) is used when obtaining the adaptation degree of the center pixel CP2(c) in the third adaptation degree interpolation range IA2(c).

The motion vector and adaptation degree are overwritten by writing-back, that is, by being returned back to the storage unit 15, and accordingly as shown in FIG. 11 and FIG. 12, the stored motion vector and adaptation degree are used in the processing for the following pixels. Therefore, the accuracy of the motion vector and an adaptation degree can be improved.

According to the present embodiment as described above, in the respective coordinates in the input frame, the thinning unit 12 thins a plurality of pixels in an area composed of M (M is an integer equal to or larger than one) pixels in a horizontal direction and N (N is an integer equal to or larger than one) pixels in a vertical direction to one representative pixel and then calculates the adaptation degree candidate by the adaptation degree candidate calculation unit 13, which makes it possible to reduce a computation amount for calculating the adaptation degree candidate. As a result, the circuit size or processing time for calculating an adaptation degree candidate can be minimized. The motion vector candidate is calculated using this adaptation degree candidate and the motion vector is detected, whereby the circuit size or processing time for detecting a motion vector can be minimized.

Further, the thinning unit 12 thins a plurality of pixels in the targeted area to one representative pixel based on the edge components of respective input frames detected by the edge detection unit 11, whereby a reduction in detection accuracy of the motion vector due to thinning can be reduced. Further, the storage unit 15 calculates a storage address of a motion vector candidate with the use of the position information of one representative pixel in the thinning and stores the motion vector candidate in the storage address, and thus a position error due to thinning can be prevented from occurring. Further, the motion vector determination unit 16 determines a motion vector and an adaptation degree using a motion vector candidate and an adaptation degree candidate, whereby an error can be prevented from occurring when the motion vector is determined.

Accordingly, it is possible to minimize a circuit size or processing time for detecting a motion vector while reducing false detection of a motion vector.

Second embodiment

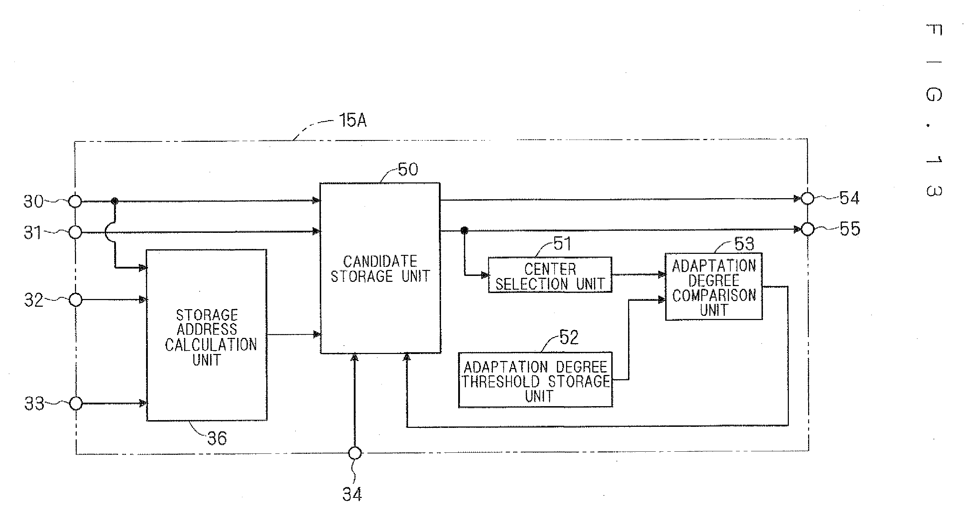

Next, a motion vector detection device according to a second embodiment of the present invention is described. The motion vector detection device according to the present embodiment is similar in configuration to the motion vector detection device 1 according to the first embodiment described above, and thus corresponding parts are denoted by the same reference numerals and description common to the first embodiment is omitted. The motion vector detection device according to the present embodiment is configured by replacing the storage unit 15 with a storage unit 15A shown in FIG. 13 in the motion vector detection device 1 according to the first embodiment shown in FIG. 1.

FIG. 13 is a block diagram showing the configuration of the storage unit 15A of the motion vector detection device according to the second embodiment of the present invention. The storage unit 15A includes a first input terminal 30, a second input terminal 31, a third input terminal 32, a fourth input terminal 33, a fifth input terminal 34, a storage address calculation unit 36, a candidate storage unit 50, a center selection unit 51 an adaptation degree threshold storage unit 52, an adaptation degree comparison unit 53, a first output terminal 54 and a second output terminal 55.

The candidate storage unit 50 stores a motion vector candidate provided by the motion vector candidate calculation unit 14 through the first input terminal 30 and an adaptation degree candidate provided by the adaptation degree candidate calculation unit 13 through the second input terminal 31. In addition, every time storing of a motion vector candidate and an adaptation degree candidate in the predetermined targeted area in a frame is finished, the candidate storage unit 50 outputs the motion vector candidate in the predetermined targeted area from the first output terminal 54 and outputs the adaptation degree candidate in the predetermined targeted area from the second output terminal 55. Further, the candidate storage unit 50 provides the center selection unit 51 with the adaptation degree candidate in the predetermined targeted area.

As to the adaptation degree provided by the candidate storage unit 50, the center selection unit 51 selects and outputs an adaptation degree candidate positioned at the center of the predetermined an adaptation degree interpolation range, for example, the area composed of M2 pixels in a horizontal direction and vertical pixels N2 shown in FIG. 10. A center pixel adaptation degree candidate that is the adaptation degree candidate output from the center selection unit 51 is provided to the adaptation degree comparison unit 53.

The adaptation degree threshold storage unit 52 stores a predetermined adaptation degree threshold for comparison with the center pixel adaptation degree candidate output from the center selection unit 51. The adaptation degree threshold storage unit 52 provides the adaptation degree threshold to the adaptation degree comparison unit 53. The adaptation degree comparison unit 53 compares the center pixel adaptation degree candidate provided by the center selection unit 51 with the adaptation degree threshold provided by the adaptation degree threshold storage unit 52, and then outputs the adaptation degree equal to or larger than the adaptation degree threshold. To be specific, the adaptation degree comparison unit 53 compares the center pixel adaptation degree candidate provided by the center selection unit 51 with the adaptation degree threshold provided by the adaptation degree threshold storage unit 52. The adaptation degree comparison unit 53 outputs the center pixel adaptation degree candidate as the adaptation degree when judging that the center pixel adaptation degree candidate is equal to or larger than the adaptation degree threshold, or outputs the adaptation degree threshold as the adaptation degree when judging that the center pixel adaptation degree candidate is smaller than the adaptation degree threshold. The adaptation degree comparison unit 53 provides the candidate storage unit 50 with the adaptation degree to be output. The candidate storage unit 50 stores the adaptation degree provided by the adaptation degree comparison unit 53 in the storage address corresponding to the center of the area composed of M2 pixels in a horizontal direction and vertical pixels N2 shown in FIG. 10 by overwriting of the stored adaptation degree candidate.

As described above, in the present embodiment, the storage unit 15A compares the center pixel adaptation degree candidate stored in the storage address corresponding to the center pixel CP2 positioned at the center of the area composed of M2 pixels in a horizontal direction and N2 pixels in a vertical direction shown in FIG. 10 that is the adaptation degree interpolation range IA2 with the adaptation degree threshold. The storage unit 15A holds the center pixel adaptation degree candidate that is the adaptation degree candidate stored in the storage address corresponding to the center pixel CP2 when the center pixel adaptation degree candidate is equal to or larger than the adaptation degree threshold, or stores the adaptation degree threshold in place of the center pixel adaptation degree candidate when the center pixel adaptation degree candidate is smaller than the adaptation degree threshold. As a result, in the motion vector determination unit 16, an occurrence of an error can be reduced due to the motion vector candidate having such a small adaptation degree as being smaller than the adaptation degree threshold when the motion vector is interpolated using the motion vector candidate and the adaptation degree candidate. In addition, all of the pixels can be provided with an adaptation degree equal to or larger than the adaptation degree threshold.

Specifically, by setting the adaptation degree threshold stored in the adaptation degree threshold storage unit 52 to a minimum value other than zero, that is, a value other than zero but is the smallest among values that may be taken by the adaptation degree candidate calculated by the adaptation degree candidate calculation unit 13, the adaptation degree candidate with a large adaptation degree remains its value as it is, while the adaptation degree candidate with a small adaptation degree is replaced with the adaptation degree threshold. As a result, all pixels can be provided with an adaptation degree equal to or larger than the adaptation degree threshold while enabling a reduction of an error generated by the motion vector candidate with a small adaptation degree during interpolation, in the motion vector determination unit 16.

Third embodiment

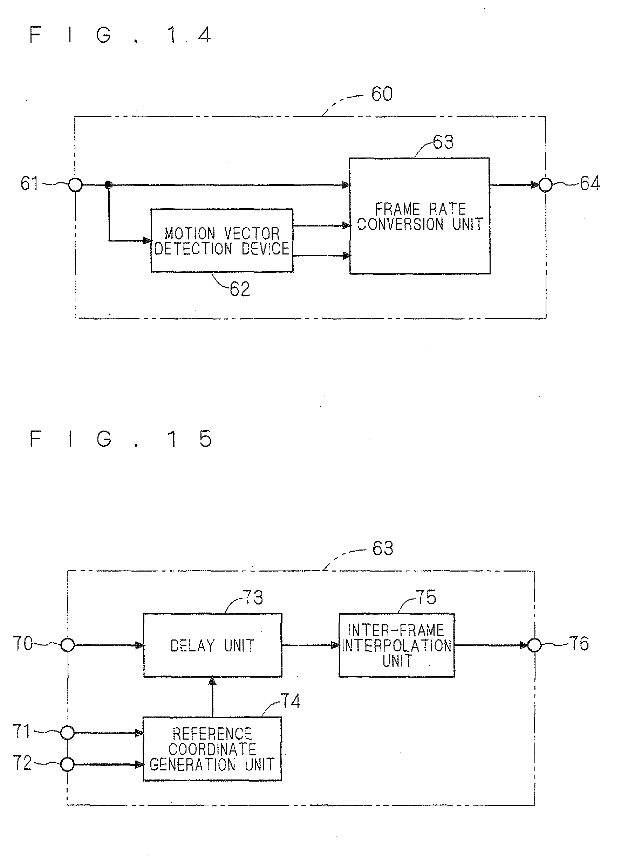

Next, an image processing apparatus according to a third embodiment of the present invention is described. FIG. 14 is a block diagram showing the configuration of an image processing apparatus 60 according to the third embodiment of the present invention. The image processing apparatus 60 includes an input terminal 61, a motion vector detection device 62, a frame rate conversion unit 63 and an output terminal 64. The motion vector detection device 62 according to the present embodiment is the motion vector detection device according to the first embodiment or the second embodiment described above.

The motion vector detection device 62 and the frame rate conversion unit 63 receive a plurality of input frames through the input terminal 61. As described in the first and second embodiments above, the motion vector detection device 62 generates a motion vector and an adaptation degree from the plurality of input frames and outputs them. The motion vector and adaptation degree output from the motion vector detection device 62 are provided to the frame rate conversion unit 63.

The frame rate conversion unit 63 generates, from the pixels included in a plurality of input frames, for example, two input frames, a pixel of an interpolation frame interpolated between those two input frames based on the motion vector and adaptation degree provided by the motion vector detection device 62, and outputs it. Accordingly, the frame rate conversion unit 63 converts a frame rate of an image. The pixel of the interpolation frame output from the frame rate conversion unit 63 is output from the output terminal 64. The frame rate conversion unit 63 is equivalent to frame rate conversion means.

FIG. 15 is a block diagram showing the configuration of the frame rate conversion unit 63. The frame rate conversion unit 63 includes a first input terminal 70, a second input terminal 71, a third input terminal 72, a delay unit 73, a reference coordinate generation unit 74, an inter-frame interpolation unit 75 and an output terminal 76.

The delay unit 73 is provided with a plurality of input frames through the first input terminal 70. The reference coordinate generation unit 74 is provided with the motion vector through the second input terminal 71 and the adaptation degree through the third input terminal 72, from the motion vector detection device 62.

The reference coordinate generation unit 74 generates reference coordinates from the motion vector provided by the motion vector detection device 62 through the second input terminal 71 and the adaptation degree provided by the motion vector detection device 62 through the third input terminal 72 and outputs them. The reference coordinates output from the reference coordinate generation unit 74 are provided to the delay unit 73.

The delay unit 73 holds a plurality of input frames provided through the first input terminal 70, and outputs the pixels corresponding to the reference coordinates provided by the reference coordinate generation unit 74, specifically, the reference coordinates of the first frame and the second frame. The pixels corresponding to the reference coordinates of the first frame and the second frame output from the delay unit 73 are provided to the inter-frame interpolation unit 75.

The inter-frame interpolation unit 75 generates a pixel of an interpolation frame from the pixels corresponding to the reference coordinates of the first frame and the second frame provided by the delay unit 73 and output it. The pixel of the interpolation frame output from the inter-frame interpolation unit 75 is output from the output terminal 76.

Next, a specific operation of the reference coordinate generation unit 74 shown in FIG. 15 is described. The reference coordinate generation unit 74 calculates reference coordinates based on the motion vector provided by the motion vector detection device 62 through the second input terminal 71 and the adaptation degree provided by the motion vector detection device 62 through the third input terminal 72 and outputs them. Specifically, the adaptation degree is compared with an adaptation degree threshold for reference coordinate calculation (hereinafter, referred to as "reference coordinate adaptation degree threshold") set in advance. When the adaptation degree is larger than the reference coordinate adaptation degree threshold as a result of comparison, the reference coordinate generation unit 74 judges that the frame interpolation can be performed using the motion vector, to thereby calculate the reference coordinates of the first frame and the second frame based on the motion vector and outputs them. In a case where the adaptation degree is equal to the reference coordinate adaptation degree threshold or is smaller than the reference coordinate adaptation degree threshold, the reference coordinate generation unit 74 judges that the motion vector cannot be used and regards the motion vector as (0, 0), to thereby output the reference coordinates of the first frame and the second frame.

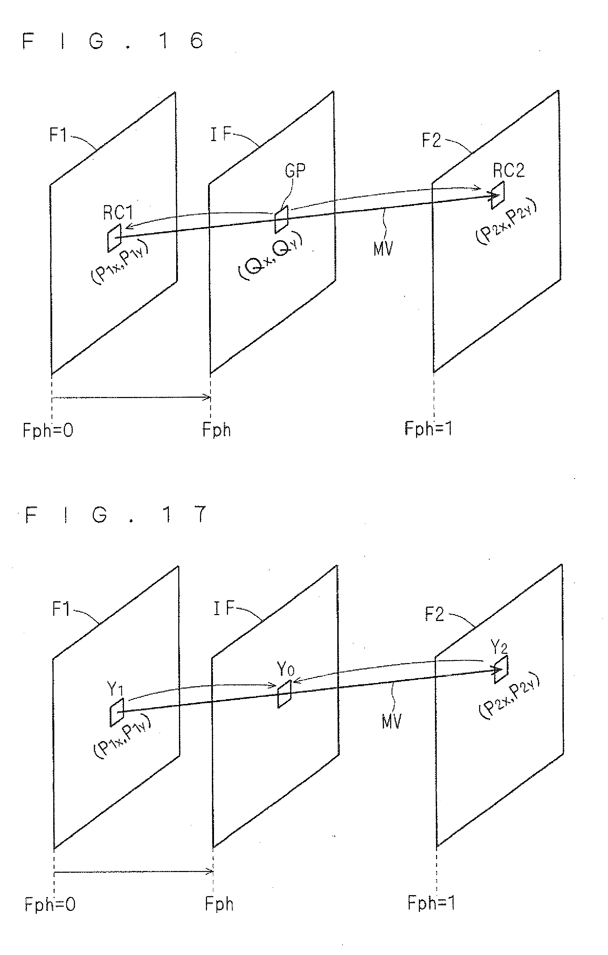

Next, description is given of the calculation of reference coordinates in a case where it is judged that frame interpolation can be performed using a motion vector. FIG. 16 is a diagram, for describing reference coordinates. In FIG. 16, the point at which a motion vector passing through a position GP of a pixel $(Q_x, Q_y)$ generated in an interpolation frame IF intersects with a first frame F1 is represented by reference coordinates RC1 $(P_{1x}, P_{1y})$ of the first frame F1, and the point at which the motion vector passing through the position GP intersects with the second frame F2 is represented by reference coordinates RC2 $(P_{2x}, P_{2y})$ of the second frame F2. The reference coordinates above can be generated in accordance with, for example, Equation (20) below.

[Math 20]

$$\left. \begin{array}{l} P_{1x} = Q_x + F_{ph} \cdot (-\xi),\ P_{1y} = Q_y + F_{ph} \cdot (-\eta) \\ P_{2x} = Q_x + (1 - F_{ph}) \cdot \xi,\ P_{2y} = Q_y + (1 - F_{ph}) \cdot \eta \end{array} \right\} \cdots (20)$$

In Equation (20), $(\xi, \eta)$ represents a motion vector and Fph represents a phase of the interpolation frame IF.

In a case where use of the motion vector is judged impossible, reference coordinates shown by Equation (21) below are output.

[Math 21]

$$P_{1x} = Q_x,\ P_{1y} = Q_y,\ P_{2x} = Q_x,\ P_{2y} = Q_y \cdots (21)$$

Next, a specific operation of the inter-frame interpolation unit 75 shown in FIG. 15 is described. FIG. 17 is a diagram for describing the generation of a pixel of the interpolation frame IF. As shown in FIG. 17, the inter-frame interpolation unit 75 generates the pixel of the interpolation frame IF from the pixels provided by the delay unit 73. The pixel of the interpolation frame is generated in accordance with, for example, Equation (22) below.

[Math 22]

$$Y_0 = (1 - F_{ph}) \cdot Y_1 + F_{ph} \cdot Y_2 \cdots (22)$$

In Equation (22), $Y_1$, represents image information of the pixel of the first frame F1 provided by the delay unit 73, $Y_2$ represents pixel information of the pixel of the second frame F2 provided by the delay unit 73, $Y_0$ represents image information of the pixel of the interpolation frame IF to be generated, and Fph represents a phase of the interpolation frame IF. The pixel of the interpolation frame IF is generated using, for example, a luminance and a color difference as the pixel information, for each of them in accordance with Equation (22). As a result, a plurality of interpolation frames can be generated among a plurality of frames, whereby frame rate conversion can be performed.

According to the present embodiment as described above, the image processing apparatus 60 includes the excellent motion vector detection device 62 as described above and the frame rate conversion unit 63. The motion vector detection device 62 is capable of minimizing a circuit size or processing time for detecting a motion vector while reducing false detection of a motion vector, and accordingly a pixel included in an interpolation frame can be generated with accuracy. Accordingly, the image processing apparatus 60 capable of converting a frame rate while reducing deterioration in image quality is achieved.

Fourth embodiment

Next, an image processing apparatus according to a fourth embodiment of the present invention is described. The image processing apparatus according to the present embodiment is similar in configuration to the image processing apparatus 60 according to the third embodiment described above, and thus the corresponding parts are denoted by the same reference numerals and the description common to the third embodiment is omitted.

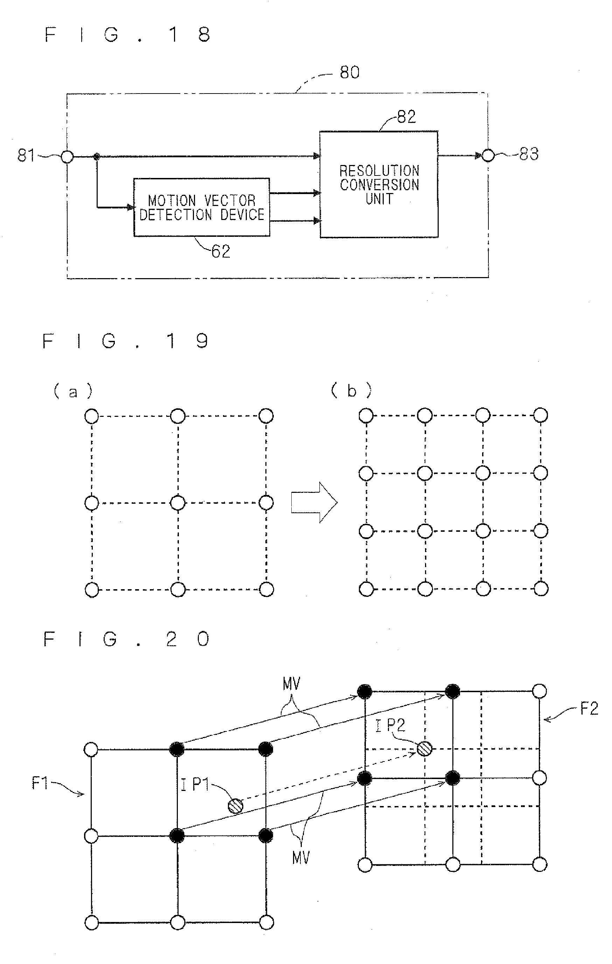

FIG. 18 is a block diagram, showing the configuration of an image processing apparatus 80 according to the fourth embodiment of the present invention. The image processing apparatus 80 includes an input terminal 81, the motion vector detection device 62, a resolution conversion unit 82 and an output terminal 83. Similarly to the image processing apparatus 60 according to the third embodiment described above, the motion vector detection device 62 is the motion vector detection device according to the first or second embodiment described above.

There are known, as the interpolation method in resolution conversion, linear interpolation in which interpolation is performed from surrounding four pixels and bi-cubic in which interpolation is performed from surrounding sixteen pixels. In these methods, interpolation processing is performed from surrounding points within one frame. In the image processing apparatus 80 according to the present embodiment, a motion vector is detected from two frames, and a plurality of pixels corresponding to each other between two frames are found, to thereby calculate a pixel having a different resolution from the plurality of pixels by interpolation processing. The number of a plurality of pixels corresponding to each other between two frames may be, for example, four as in linear interpolation or sixteen as in bi-cubic.

The motion vector detection device 62 and the resolution conversion unit 82 are provided with a plurality of input frames from the input terminal 81 as shown in FIG. 18. The motion vector detection device 62 generates a motion vector and an adaptation degree from a plurality of input frames and outputs them as described in the first and second embodiments described above. The motion vector and adaptation degree output from the motion vector detection device 62 are provided to the resolution conversion unit 82.

The resolution conversion unit 82 generates a new pixel obtained by resolution conversion of pixels included in a plurality of input frames, for example, two input frames based on the motion vector and adaptation degree provided by the motion vector detection device 62 and outputs it. As a result, a new image having a resolution different from that of an image composed in the plurality of input frames is generated. The pixel subjected to resolution conversion that is output from the resolution conversion unit 82 is output from the output terminal 83. The resolution conversion unit 82 is equivalent to resolution conversion means.

FIG. 19 is a diagram for describing an operation of the resolution conversion unit 82. FIG. 19(a) is a diagram showing grids before resolution conversion, and FIG. 19(b) is a diagram showing grids after resolution conversion. FIG. 19(a) shows 9 grids and FIG. 19(b) shows 16 grids. FIG. 20 is a diagram for describing the operation of the resolution conversion unit 82. As shown in FIG. 19, description is given by taking a case where an input frame is magnified 4/3 times as an example. The resolution conversion unit 82 searches the motion vectors provided by the motion vector detection device 62 for four adjacent motion vectors that have a similar amount of movement as shown in FIG. 20, and finds a set of four pixels corresponding to each other between the first frame F1 and the second frame F2. On this occasion, the motion vector having an adaptation degree equal to or smaller than a search adaptation degree threshold that is a predetermined adaptation degree threshold for motion vector search is excluded from the search target. Next, the resolution conversion unit 82 interpolates the found set of four pixels respectively in the first frame F1 and the second frame F2 and calculates an interpolation pixel IP1 of the first frame F1 and an interpolation pixel IP2 of the second frame F2. Further, the resolution conversion unit 82 calculates pixels subjected to resolution conversion by interpolation processing from the interpolation pixel IP1 of the first frame F1 and the interpolation pixel IP2 of the second frame F2 and outputs them. As to pixels in which four adjacent motion vectors having a similar amount of movement are not found, the resolution conversion unit 82 calculates pixels subjected to resolution conversion by performing interpolation processing from surrounding four pixels in the second frame F2 and outputs them.

The resolution conversion can be performed by obtaining pixels having different resolutions as described above. While the description is given of the case where resolution conversion is performed using four corresponding pixels of the first frame F1 and the second frame F2 in the present embodiment, the number of corresponding pixels is not necessarily four and may be, for example, sixteen.

According to the present embodiment described above, the image processing apparatus 80 includes the excellent motion vector detection device 62 as described above and the resolution conversion unit 83. The motion vector detection device 62 is capable of minimizing a circuit size or processing time for detecting a motion vector while reducing false detection of the motion vector. Accordingly, it is possible to achieve the image processing apparatus 80 capable of generating new images having different resolutions while reducing a decrease in image quality.

While the embodiments of the present invention have been shown and described in detail, the foregoing description is in all aspects illustrative, and the present invention is not limited thereto. That is, numerous modifications and variations can be devised in the described aspects without departing from the scope of the invention.

**Claims**

1.  A motion vector detection device (1, 62) detecting, between first and second input frames, a motion vector associating one or more pixels respectively included in said first and second input frames with each other, comprising:

    edge detection means (11) for detecting edge components of each of said input frames;
    thinning means (12) for thinning a plurality of pixels included in a predetermined targeted area of each of said input frames to one pixel to be representative based on the edge components detected by said edge detection means (11) and outputting this pixel as one representative pixel;
    adaptation degree candidate calculation means (13) for calculating an adaptation degree candidate to be a candidate for an adaptation degree indicating an adaptation degree of an amount of movement between said first and second input frames, with the use of said one representative pixel of said first input frame and said one representative pixel of said second input frame output from said thinning means (12);
    motion vector candidate calculation means (14) for calculating a motion vector candidate to be a candidate for said motion vector between said first and second input frames, based on a position of said one representative pixel output from said thinning means (12) in each input frame and said adaptation degree candidate calculated by said adaptation degree candidate calculation means (13);
    storage means (15) for storing said adaptation degree candidate calculated by said adaptation degree candidate calculation means (13) and said motion vector candidate calculated by said motion vector candidate calculation means (14); and
    motion vector determination means (16) for determining said adaptation degree and said motion vector based on said adaptation degree candidate and said motion vector candidate stored in said storage means (15),
    wherein said storage means (15) calculates a storage address in which said motion vector candidate and said adaptation degree candidate are stored based on the position of said one representative pixel output from said thinning means (12) in each input frame, and stores said motion vector candidate and said adaptation degree candidate in said calculated storage address.

2.  The motion vector detection device according to Claim 1, wherein:

    said adaptation degree candidate calculated by said adaptation degree candidate calculation means (13) includes a horizontal component corresponding to a horizontal direction of each of said input frames and a vertical component corresponding to a vertical direction of each of said input frames; and
    said motion vector candidate calculated by said motion vector candidate calculation means (14) includes a horizontal component corresponding to the horizontal direction of each of said input frames and a vertical component corresponding to the vertical direction of each of said input frames.

3.  The motion vector detection device according to Claim 2, wherein said motion vector determination means (16) calculates a horizontal component of said motion vector based on the horizontal component of said adaptation degree candidate and the horizontal component of said motion vector, and calculates a vertical component of said motion vector based on the vertical component of said adaptation degree candidate and the vertical component of said motion vector.

4.  The motion vector detection device according to any one of Claims 1 to 3, wherein said motion vector determination means (16) calculates, with the use of the motion vector candidates and the adaptation degree candidates of pixels included in a predetermined motion vector interpolation range among the motion vector candidates and the adaptation degree candidates stored in said storage means (15), a motion vector of a center pixel positioned at a center of said motion vector interpolation range.

**5.** The motion vector detection device according to Claim 4, wherein said motion vector determination means (16) averages, with the use of pixels in which the motion vector candidates and the adaptation degree candidates are stored among the pixels included in said motion vector interpolation range, the motion vector candidates and the adaptation degree candidates of the pixels by the number of the pixels, to thereby calculate the motion vector of said center pixel.

**6.** The motion vector detection device according to Claim 4, wherein said storage means (15) stores, upon calculation of the motion vector of said center pixel by said motion vector determination means (16), the motion vector of said center pixel calculated by said motion vector determination means (16) in place of the motion vector candidate stored in the storage address corresponding to said center pixel.

**7.** The motion vector detection device according to any one of Claims 1 to 3, wherein said motion vector determination means (16) weighs the motion vector candidates and the adaptation degree candidates included in a predetermined motion vector interpolation range among the motion vector candidates and the adaptation degree candidates stored in said storage means (15) correspondingly to a distance from a center of said motion vector interpolation range, to thereby calculate said motion vector.

**8.** The motion vector detection device according to Claim 1, wherein said motion vector determination means (16) calculates, with the use of adaptation degree candidates of pixels included in a predetermined adaptation degree interpolation range among the adaptation degree candidates stored in said storage means (15), an adaptation degree of a center pixel positioned at a center of said adaptation degree interpolation range.

**9.** The motion vector detection device according to Claim 8, wherein said motion vector determination means (16) simply averages the adaptation degree candidates of the pixels included in said adaptation degree interpolation range, to thereby calculate the adaptation degree of said center pixel.

**10.** The motion vector detection device according to Claim 8 or 9, wherein said storage means (15) stores, upon calculation of the adaptation degree of said center pixel by said motion vector determination means (16), the adaptation degree of said center pixel calculated by said motion vector determination means (16) in place of the adaptation degree candidate stored in the storage address corresponding to said center pixel.

**11.** The motion vector detection device according to Claim 1, wherein said storage means (15) compares, among the adaptation degree candidates stored in said storage means (15), a center pixel adaptation degree candidate stored in a storage address corresponding to a center pixel positioned at a center of a predetermined adaptation degree interpolation range with a predetermined adaptation degree threshold, and holds the adaptation degree candidate stored in the storage address corresponding to said center pixel when said center pixel adaptation degree candidate is equal to or larger than said adaptation degree threshold, or stores said adaptation degree threshold in place of said center pixel adaptation degree candidate when said center pixel adaptation degree candidate is smaller than said adaptation degree threshold.

**12.** The motion vector detection device according to Claim 11, wherein said adaptation degree threshold is a value other than zero and is a minimum value among values take by said adaptation degree candidate calculated by said adaptation degree candidate calculation means (13).

**13.** The motion vector detection device according to Claim 1, wherein said storage means (15) calculates said storage address using, among the plurality of pixels included in said targeted area, coordinates generated by thinning pixels corresponding to a horizontal direction of each of said input frames to said one representative pixel.

**14.** An image processing apparatus (60), comprising:

the motion vector detection device (1, 62) according to any one of Claims 1 to 13; and
frame rate conversion means (63) for generating a pixel included in an interpolation frame interpolated between said first and second input frames among the pixels included in said first and second input frames based on said motion vector and said adaptation degree detected by said motion vector detection device (1, 62), to thereby convert a frame rate of an image.

**15.** An image processing apparatus (80), comprising:

the motion vector detection device (1, 62) according to any one of Claims 1 to 13; and
resolution conversion means (82) for generating a new pixel from the pixels included in said first and second input frames based on said motion, vector and said adaptation degree detected by said motion vector detection device (1, 62), to thereby generate a new image having a resolution different from that of an image composed of said first and second input frames.

EP 2 317 763 A1

F I G . 1

F I G . 2

F I G . 3

F I G . 4

F I G . 5

EP 2 317 763 A1

FIG. 6

(a)　　　　　　　　(b)

SEARCH RANGE AFTER
THINNING OF FIRST FRAME

SEARCH RANGE AFTER
THINNING OF SECOND FRAME

F I G . 7

SEARCH RANGE AFTER
THINNING OF FIRST FRAME

SEARCH RANGE AFTER
THINNING OF SECOND FRAME

F I G . 8

F I G . 9

CP1

I A1

N1 PIXELS

M1 PIXELS

F I G . 1 0

I A2

CP2

N2 PIXELS

M2 PIXELS

FIG. 11

(a)

IF

CP1(a)

I A1(a)

PROCESSING OF SUBSEQUENT PIXEL

(b)

IF

CP1(b)

CP1(a)

I A1(b)

PROCESSING OF FURTHER SUBSEQUENT PIXEL

(c)

IF

CP1(c)

I A1(c)

CP1(a)  CP1(b)

F I G . 1 2

( a )

CP2(a)

I A2(a)

( b )

PROCESSING OF SUBSEQUENT PIXEL

CP2(b)

I A2(b)

CP2(a)

( c )

PROCESSING OF FURTHER SUBSEQUENT PIXEL

CP2(c)

I A2(c)

CP2(a)   CP2(b)

F I G . 1 3

F I G . 1 4

```
                                          ┌─ 60
  ┌─────────────────────────────────────────────────────────────┐
  │                                         ┌─ 63               │
  │                               ┌──────────────────────┐       │
  │                               │                      │       │
61─○──────●──────────────────────▶│   FRAME RATE         │─────▶○─64
  │       │                       │   CONVERSION UNIT     │       │
  │       │     ┌───────────────┐ │                      │       │
  │       └────▶│ MOTION VECTOR  │▶│                      │       │
  │             │DETECTION DEVICE│▶│                      │       │
  │             └───────────────┘ └──────────────────────┘       │
  │                     └─ 62                                     │
  └─────────────────────────────────────────────────────────────┘
```

F I G . 1 5

```
                                          ┌─ 63
  ┌─────────────────────────────────────────────────────────────┐
  │                  ┌─ 73                 ┌─ 75                │
  │            ┌──────────────┐      ┌──────────────┐            │
70─○─────────▶│  DELAY UNIT   │─────▶│ INTER-FRAME   │────────▶○─76
  │            │              │      │ INTERPOLATION │            │
  │            └──────────────┘      │     UNIT      │            │
  │                   ▲              └──────────────┘            │
  │                   │  ┌─ 74                                    │
  │            ┌──────────────┐                                  │
71─○─────────▶│  REFERENCE    │                                  │
  │            │  COORDINATE   │                                  │
72─○─────────▶│GENERATION UNIT│                                  │
  │            └──────────────┘                                  │
  └─────────────────────────────────────────────────────────────┘
```

30

F I G . 1 6

F1  IF  GP  F2

RC1  RC2

$(P_{1x}, P_{1y})$  $(Q_x, Q_y)$  MV  $(P_{2x}, P_{2y})$

Fph=0  Fph  Fph=1

F I G . 1 7

F1  IF  F2

$Y_2$

$Y_1$  $Y_0$

$(P_{1x}, P_{1y})$  MV  $(P_{2x}, P_{2y})$

Fph=0  Fph  Fph=1

31

FIG. 18

FIG. 19

(a)                    (b)

FIG. 20

## INTERNATIONAL SEARCH REPORT

| International application No. |
| --- |
| PCT/JP2009/055423 |

A. CLASSIFICATION OF SUBJECT MATTER
*H04N7/01*(2006.01)i, *G06T7/20*(2006.01)i

According to International Patent Classification (IPC) or to both national classification and IPC

B. FIELDS SEARCHED

Minimum documentation searched (classification system followed by classification symbols)
H04N7/01, G06T7/20

Documentation searched other than minimum documentation to the extent that such documents are included in the fields searched
Jitsuyo Shinan Koho      1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2006-186504 A  (Sony Corp.),<br>13 July, 2006 (13.07.06),<br>Full text; all drawings<br>(Family: none) | 1-7,11-15<br>8-10 |
| Y<br>A | JP 3534551 B2  (Sharp Corp.),<br>07 June, 2004 (07.06.04),<br>Full text; all drawings<br>& WO 1998/012869 A1     & US 6650362 B1 | 1-7,11-15<br>8-10 |
| Y<br>A | Masayuki KOBAYASHI, Susumu ITO, Toshio<br>UTSUNOMIYA, "Ryoiki Bunkatsu to Warping<br>Yosoku ni Motozuita Ugoki Hosho Hoshiki",<br>1995 Nen IEICE Information and System Society<br>Conference, 1995, P111 | 1-7,11-15<br>8-10 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 June, 2009 (16.06.09) | 30 June, 2009 (30.06.09) |

| Name and mailing address of the ISA/<br>Japanese Patent Office | Authorized officer |
| --- | --- |
| Facsimile No. | Telephone No. |

Form PCT/ISA/210 (second sheet) (April 2007)

**INTERNATIONAL SEARCH REPORT**

| International application No. |
| --- |
| PCT/JP2009/055423 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 8-163573 A  (Matsushita Electric Industrial Co., Ltd.),<br>21 June, 1996 (21.06.96),<br>Full text; all drawings<br>& US 5796437 A          & US 5886745 A | 1-7,11-15<br>8-10 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002027414 A

- JP 3935500 B

**Non-patent literature cited in the description**

- Multi-dimensional signal processing for TV image. **Takahiko Fukinuki.** Nikkan Kogyo Simbun Sha. 15 November 1988, 193-212